# EUROPÄISCHE PATENTSCHRIFT

(11) **EP 1 292 373 B1**
(45) Veröffentlichungstag und Bekanntmachung des Hinweises auf die Patenterteilung: **12.05.2004**
(21) Anmeldenummer: 01940557.0
(22) Anmeldetag: 08.06.2001
(51) Int. Cl.: B01D 17/00, B01D 11/04

(54) **VERFAHREN ZUR PHASENTRENNUNG**
METHOD FOR PHASE SEPARATION
PROCEDE DE SEPARATION DE PHASES

(30) Priorität: 09.06.2000 DE 10028611
(43) Veröffentlichungstag der Anmeldung: 19.03.2003
(73) Patentinhaber: Pika Weihenstephan GmbH, 85350 Freising-Weihenstephan (DE)
(72) Erfinder: VOGESER, Gudrun, 85276 Pfaffenhofen (DE)
(74) Vertreter: Kador & Partner
(86) Internationale Anmeldenummer: PCT/EP2001/006540
(87) Internationale Veröffentlichungsnummer: WO 2001/093975

(56) Entgegenhaltungen:
- EP-A- 0 732 378

## Beschreibung

Die Erfindung betrifft ein Verfahren zur Phasentrennung von zwei oder mehr im Gemisch vorliegenden flüssigen Phasen.

Phasentrennungen kommen sowohl im Labormaßstab als auch im Technikumsmaßstab oder im großtechnischen Maßstab an zahlreichen Stellen in verschiedenen Verfahren zur Anwendung. So erfordern verschiedene Trennverfahren, wie z.B. Extraktionen, die Trennung der sich bildenden Phasen.

Bei Standardverfahren zur Phasentrennung tritt oft die Schwierigkeit auf, daß sich die zu trennenden Phasen visuell nur schwer unterscheiden lassen, was eine zügige Trennung der Proben, insbesondere in Routineverfahren mit hoher Probenanzahl, erschwert.

Aufgabe der vorliegenden Erfindung ist es, ein Verfahren zur Phasentrennung von zwei oder mehr flüssigen Phasen zu schaffen, das sich durch eine verbesserte Unterscheidbarkeit der zu trennenden Phasen auszeichnet und das sich nicht negativ auf eine sich anschließende Weiterverarbeitung der aufgetrennten Phasen auswirkt.

Der Erfindung liegt die Erkenntnis zugrunde, daß sich die Unterscheidbarkeit der Phasen bei einer Phasentrennung durch den Einsatz von Lebensmittelfarbstoffen verbessern läßt.

Gegenstand der Erfindung ist ein Verfahren zur Phasentrennung von zwei oder mehr im Gemisch vorliegenden flüssigen Phasen, das dadurch gekennzeichnet ist, daß zumindest ein Lebensmittelfarbstoff zugesetzt wird, der zumindest eine Phase stärker anfärbt als eine andere.

Das erfindungsgemäße Verfahren zur Phasentrennung von zwei oder mehr im Gemisch vorliegenden flüssigen Phasen hat den großen Vorteil, daß die Phasengrenze zwischen den unterschiedlichen Phasen eindeutig sichtbar gemacht wird, wodurch die Trennung der Phasen erleichtert wird. Dies ist insbesondere dann besonders vorteilhaft, wenn beide Phasen zuvor gleichfarbig, z.B. farblos, waren; aber auch dann, wenn eine oder beide Phasen zuvor eine gewisse Eigenfärbung aufwiesen, die Phasengrenze aber trotzdem nicht optimal erkennbar war. Durch die Anfärbung wird die visuelle Unterscheidbarkeit der zu trennenden Phasen verbessert und somit eine schnellere Verarbeitung einzelner Proben ermöglicht. Dies ist insbesondere bei Routineverfahren, die mit hoher Probenanzahl durchgeführt werden, von entscheidendem Vorteil, da mit Hilfe des erfindungsgemäßen Verfahrens eine höhere Zahl von Proben innerhalb einer gleichbleibenden Zeit verarbeitet werden kann. Dadurch läßt sich die Aussagekraft von verschiedenen Analysemethoden, die auf der Ermittlung von Durchschnittswerten beruhen, signifikant steigern.

Ein weiterer Vorteil der Erfindung besteht darin, daß die zugesetzten Lebensmittelfarbstoffe weitgehend inert gegenüber herkömmlichen einer Phasentrennung zu unterziehenden Gemischen flüssiger Phasen sind. Somit werden die aufzutrennenden Flüssigkeitsphasen, selbst dann, wenn in einer oder mehrerer Phasen empfindliche Stoffe gelöst sind, durch die Verwendung der Lebensmittelfarbstoffe bei der Phasentrennung, nicht negativ beeinflußt. Von besonderem Vorteil ist es auch, daß die gemäß dem erfmdungsgemäßen Verfahren zur Phasentrennung zugesetzten Lebensmittelfarbstoffe eine mögliche Weiterverarbeitung der aufgetrennten Phasen nicht negativ beeinflussen, d.h. eine solche Weiterverarbeitung nicht stören, hemmen, behindern oder verhindern: So verhalten sich die verwendeten Lebensmittelfarbstoffe gegenüber einer Vielzahl von bekannten Analysemethoden inert und beeinflussen somit weitere Versuche und deren Ergebnisse nicht.
Ferner ist es von Vorteil, daß die in dem erfindungsgemäßen Verfahren zur Phasentrennung zugesetzten Lebensmittelfarbstoffe gesundheitlich unbedenklich sind. Dadurch läßt sich das erfindungsgemäße Verfahren auch bei der Herstellung oder Verarbeitung von Nahrungsmitteln oder bei der Verarbeitung von empfindlichen Zellkulturen einsetzen. Diese Universalität des erfindungsgemäßen Verfahrens zur Phasentrennung ermöglicht den Einsatz des Verfahrens ohne nennenswerte Einschränkungen. Ein weiterer Vorteil des erfindungsgemäßen Verfahrens zur Phasentrennung ist es, daß sich die aufgetrennten Phasen in der Regel leicht entsorgen lassen, da die zugesetzten gesundheitlich unbedenklichen Lebensmittelfarbstoffe diesbezüglich unkritisch sind.

Das Verfahren zur Phasentrennung von zwei oder mehr im Gemisch vorliegenden flüssigen Phasen bezieht sich auf die Trennung von zwei oder mehr flüssigen Phasen, die sich entweder von selbst oder nach Ausschütteln bilden. Dabei kann die Bildung klarer Phasengrenzen durch bekannte Verfahren, wie z.B. Zentrifugation, verbessert oder beschleunigt werden. Der oder die zugesetzten Lebensmittelfarbstoffe färben zumindest eine Phase stärker als eine andere an. Dies bedeutet, daß ein zugesetzter Lebensmittelfarbstoff eine oder mehrere der zwei oder mehr im Gemisch vorliegenden flüssigen Phasen anfärben kann, wobei in dem Fall, daß mehr als eine Phase angefärbt wird, die Färbung der Phasen unterschiedlich stark bzw. intensiv ist.

Vorzugsweise wird jedoch nur ein Lebensmittelfarbstoff verwendet. Damit lassen sich auf einfache Art und Weise gute Ergebnisse erzielen. Besonders bevorzugt ist es, wenn der Lebensmittelfarbstoff sich nur in eine der zwei oder mehr flüssigen Phasen einlagert und diese färbt. Dadurch wird eine der zwei oder mehr im Gemisch vorliegenden flüssigen Phasen besonders hervorgehoben und somit die visuelle Unterscheidbarkeit besonders gut verbessert, wodurch wiederum eine einfachere, schnellere und leichtere Phasentrennung ermöglicht wird. Die Färbung der Phase oder der Phasen durch den zugesetzten Lebensmittelfarbstoff entsteht dadurch, daß sich der Lebensmittelfarbstoff in der entsprechenden Phase löst oder darin suspendiert wird.

Gemäß einer besonders bevorzugten Ausführungsform des erfindungsgemäßen Verfahrens liegen zwei Phasen vor. Dadurch wird das Verfahren weiter vereinfacht und läßt sich insbesondere bei Routineverfahren, die mit hoher Probenanzahl durchgeführt werden, rasch und zügig durchführen. Vorzugsweise handelt es sich bei diesen beiden Phasen um eine wässrige Phase und um eine organische Phase.

Nach einer weiteren bevorzugten Ausführungsform wird die wässrige Phase durch den verwendeten Lebensmittelfarbstoff angefärbt. Da die meisten Lebensmittelfarbstoffe gut wasserlöslich sind, steht eine Vielzahl von möglichen Lebensmittelfarbstoffen zur Verfügung, die verwendet werden können. Bei der Auswahl eines geeigneten Lebensmittelfarbstoffs kann das erfindungsgemäße Verfahren zur Phasentrennung aber auch so durchgeführt werden, daß eine organische Phase mit einem Lebensmittelfarbstoff angefärbt wird. Gemäß einer weiteren bevorzugten Ausführungsform des erfindungsgemäßen Verfahrens zur Phasentrennung von zwei oder mehr im Gemisch vorliegenden flüssigen Phasen enthält eine Phase hydrophile Bestandteile einer Probe, die zuvor aus dieser Probe extrahiert wurden. Nach einer anderen bevorzugten Ausführungsform enthält eine Phase lipophile Bestandteile einer Probe, die zuvor aus dieser Probe extrahiert wurden. Diese beiden vorgenannten Ausführungsformen können auch in Kombination vorliegen, so daß eine Phase die lipophilen Bestandteile einer Probe und eine Phase die hydrophilen Bestandteile einer Probe enthält. Vorzugsweise enthält eine wässrige Phase die hydrophilen Bestandteile und eine organische Phase die lipophilen Bestandteile. Auf diese Weise ist es möglich, daß erfindungsgemäße Verfahren zur Phasentrennung im Rahmen der Aufarbeitung bei einem Extraktionsverfahren einzusetzen. Dabei kann bereits die Probe selbst oder aber die für die Extraktion einer Probe verwendeten Flüssigkeiten mit den entsprechenden Lebensmittelfarbstoffen versetzt werden. Diese besonders vorteilhafte Kombination eines Extraktionsverfahrens mit dem erfindungsgemäßen Verfahren zur Phasentrennung läßt sich insbesondere dann auf einfache Art und Weise durchführen, wenn bei den Extraktionen mit organischer und wässriger Phase gearbeitet wird. Dies ist zum Beispiel dann der Fall, wenn die hydrophilen und lipophilen Bestandteile einer Probe getrennt werden sollen, wie z.B. bei der Extraktion von Salzen, phenolischen Verbindungen, Proteinen, Kohlenhydraten, Fetten, Nukleinsäuren, Organellen und/oder anderen Zellbestandteilen. Wegen der besonderen Vorteile des Verfahrens, insbesondere der verbesserten visuellen Unterscheidbarkeit der Phasen, läßt sich auch hier wieder eine raschere Verarbeitbarkeit der Proben bei gleichzeitig erhöhter Zuverlässigkeit der Verarbeitung erzielen. Dies ist insbesondere dann von Vorteil, wenn zahlreiche Proben in Routineverfahren mit hoher Probenanzahl verarbeitet werden.

Gemäß einer weiteren bevorzugten Ausführungsform wird die weiter zu verarbeitende Phase mit dem Lebensmittelfarbstoff gefärbt. Dies ist besonders vorteilhaft, weil bei dem Transferieren abgetrennter Flüssigkeitsmengen in ein bestimmtes Gefäß oder Objekt oftmals das Problem besteht, daß nur schwer erkennbar ist, ob das Gefäß oder Objekt bereits beschickt wurde. Wird die zur Weiterverarbeitung bestimmte Phase angefärbt, so ist eindeutig erkennbar, welche Gefäße oder Objekte bereits befüllt wurden. Somit können Verwechslungen bzw. Auslassungen von Probengefäßen vermieden werden, die ansonsten zur Verfälschung gesamter Versuchsreihen führen können. Durch die Ausschaltung der Verwechslungsgefahr läßt sich daher die Zuverlässigkeit, insbesondere von Routineverfahren mit hoher Probenanzahl, signifikant steigern. Von besonderem Vorteil ist es dabei, daß die verwendeten Lebensmittelfarbstoffe sich sowohl gegenüber den meisten Proben inert verhalten, als auch weitere Reaktionen, die nach der Abtrennung einer Phase durchgeführt werden, im allgemeinen nicht negativ beeinflussen, d.h. nicht stören, hemmen, behindern oder verhindern. Die verwendeten Lebensmittelfarbstoffe beeinflussen somit weitere Versuche, die mit den abgetrennten Phasen durchgeführt werden, nicht, so daß die erhaltenen Ergebnisse solcher Folgereaktionen oder Analysemethoden nicht verfälscht werden. Da die verwendeten Lebensmittelfarbstoffe auch gesundheitlich unbedenklich sind, können sie praktisch ohne Einschränkungen verwendet werden, so daß das erfindungsgemäße Verfahren zur Phasentrennung von zwei oder mehr im Gemisch vorliegenden flüssigen Phasen sich ebenfalls praktisch ohne Einschränkung verwenden läßt. Dies gilt selbst in Einsatzbereichen, wo mit empfindlichen Zellkulturen oder Lebensmitteln gearbeitet wird. Wird die weiter zu verwendende Phase gefärbt, während die andere Phase farblos bleibt, so kann die gefärbte Phase, beispielsweise nach einer Extraktion, abgetrennt werden. Die Färbung der betreffenden Phase kann dadurch bewerkstelligt werden, daß die Proben selbst oder die für die Extraktion einer Probe verwendeten Flüssigkeiten mit in der entsprechenden Phase löslichen oder suspendierbaren Farbstoffen versetzt werden. Der Lebensmittelfarbstoff kann aber auch erst unmittelbar vor oder bei der Phasentrennung zugesetzt werden

Die Abtrennung der gefärbten Phase kann durch übliche Methoden, wie z.B. Umpipettieren, erfolgen. Insbesondere, wenn man im Labormaßstab arbeitet, werden die abgetrennten Flüssigkeitsmengen oftmals auf Mikrotiterplatten gegeben, um dort beispielsweise weitere Reaktionen mit den einzelnen Proben durchzuführen. Werden auf diese Weise viele Proben gleichzeitig bearbeitet, läßt sich auf den Mikrotiterplatten oft nur schwer erkennen, ob eine bestimmte Vertiefung bereits beschickt wurde. Die damit einhergehende erhebliche Verwechslungsgefahr läßt sich durch die Anfärbung der weiter zu bearbeitenden Phase mit den Lebensmittelfarbstoffen praktisch ausschalten, wobei es besonders vorteilhaft ist, daß die verwendeten Lebensmittelfarbstoffe weitere Nachweisreaktionen praktisch nicht beeinflussen. Dieser besondere Vorteil ist aber nicht auf den Labormaßstab beschränkt, sondern erstreckt sich auch auf Phasentrennungen, die im größeren Maßstab durchgeführt werden. So kann es insbesondere dann, wenn mit gefährlichen Substanzen gearbeitet wird, oder, wenn Substanzen verarbeitet werden, die später in irgendeiner Form bei der Verarbeitung von Lebensmitteln eingesetzt werden, unter Sicherheitsaspekten von entscheidendem Vorteil sein, wenn die weiter zu verarbeitende Phase durch eine Färbung eindeutig erkennbar ist.

Nach einer weiteren bevorzugten Ausführungsform des erfindungsgemäßen Verfahrens zur Phasentrennung enthält eine der Phasen Nukleinsäure oder Nukleinsäurebestandteile, die zuvor aus einer Probe extrahiert wurden. Auch hier zeigt sich wieder der besondere Vorteil des erfindungsgemäßen Verfahrens, der es erlaubt, zur Verbesserung der visuellen Erkennbarkeit verschiedener Phasen, einen Lebensmittelfarbstoff zuzusetzen, der weitere Nachweis- oder Analysereaktionen nicht negativ beeinflußt. So können solche Nukleinsäure enthaltenden Phasen nach der Phasentrennung durch bekannte Methoden analysiert werden, wie z.B. durch Restriktionsanalysen, Polymerase Chain Reaction, Blotten oder Hybridisierungen. Dabei kann es je nach den gegebenen Konzentrationsverhältnissen von Vorteil sein, die Phase vor der Weiterverarbeitung bzw. Analyse aufzukonzentrieren.

Bei dem erfindungsgemäßen Verfahren zur Phasentrennung von zwei oder mehr im Gemisch vorliegenden flüssigen Phasen, kann jeder der bekannten Lebensmittelfarbstoffe zugesetzt werden. Es können auch mehrere einzelne Lebensmittelfarbstoffe oder ein Gemisch der Lebensmittelfarbstoffe zugesetzt werden. Im folgenden wird eine beispielhafte Aufzählung von gut geeigneten Lebensmittelfarbstoffen gegeben, die bei dem erfindungsgemäßen Verfahren zugesetzt werden können:

| | |
|---|---|
| E100 | Kurkumin (gelb, Gelbwurzel (Kurkuman), Bestandteil des Curry) |
| E101 | Riboflavin, Lactofalvin (gelb, Vitamin B2) |
| E101a | Lactoflavin Phosphatester (gelb) |
| E102 | Tartrazin (gelb) |
| E 104 | Chinolingelb (gelb) |
| E110 | Gelborange S (orange) |
| E120 | Cochenille (rot) |
| E122 | Azorubin (rot) |
| E123 | Amaranth (rot) |
| E124 | Ponceau 4R (rot) |
| E127 | Erythrosin (rot) |
| E131 | Patentblau V (blau) |
| E132 | Indigotin (blau) |
| E140 | Chlorophylle (grün, Farbstoffe des Blattgrün) |
| E141 | Chlorophyllin (Na-Cu-Chlorophyllin), Lebensmittelfarbstoff |
| E142 | Brillantsäuregrün (grün) |
| E151 | Brillantschwarz BN (schwarz) |
| E153 | Carbo medicinalis (schwarz, medizinische Pflanzenkohle) |
| E 160 | Carotinoide (orange) |
| E160a | alpha-, beta-, gamma-Carotin (Vorstufe des Vitamin A) |
| E160b | Bixin, Norbixin, Annato, Orlean |
| E160c | Capsanthin |
| E 160d | Capsorubin |
| E160e | Lycobin, Beta-Apo-8- |
| E160f | Carotinal, Carotinsäure-Ethylester |
| E 161 | Xanthophylle (orange) |
| E161a | Flavoxanthin |
| E161b | Lutein (Hummerschalen) |
| E161c | Kryptoaxanthin |
| E161d | Rubixanthin |
| E161e | Violaxanthin |
| E161f | Rhodoxanthin |
| E161g | Canthaxanthin |
| E162 | Beetenrot, Betanoin (rot, Extrakt aus der Randenwurzel) |
| E163 | Anthocyane (rot/blau, Mineralische Pigmente aus Schalen von Trauben, Holunder usw.) |

Da die Lebensmittelfarbstoffe im allgemeinen eine gute Färbung hervorrufen, ist es ausreichend, die Lebensmittelfarbstoffe in relativ geringen Konzentrationen zuzusetzen. Im allgemeinen wird eine Konzentration des Lebensmittelfarbstoffs in dem einer Phasentrennung zu unterwerfenden Gemisch von 0,001% bis 3% eingestellt. Vorzugsweise beträgt die Konzentration 0,01% bis 0,5% und besonders bevorzugt sind Konzentrationsbereiche von 0,01% bis 0,1%. Die Untergrenze für die geringstmögliche Konzentration des jeweils verwendeten Lebensmittelfarbstoffs in dem erfindungsgemäßen Verfahren zur Phasentrennung von zwei oder mehr im Gemisch vorliegenden flüssigen Phasen wird dadurch bestimmt, daß zumindest gerade noch eine Färbung von einer Phase erreicht werden muß. Die Obergrenze für die Konzentration des in dem erfindungsgemäßen Verfahren zur Phasentrennung verwendeten Lebensmittelfarbstoffs wird im Prinzip nur durch die Löslichkeit des Lebensmittelfarbstoffs bestimmt. Da die verwendeten Lebensmittelfarbstoffe sich praktisch inert gegenüber verschiedenartigsten Proben, sowie gegenüber herkömmlichen Analyse- und Nachweisreaktionen für eine Vielzahl von Substanzen verhalten, können auch extrem hohe Konzentrationen des oder der Lebensmittelfarbstoffe von mehr als 3% verwendet werden.

Die Erfindung wird nachstehend anhand von Beispielen näher beschrieben.

### Beispiel 1

250 µl einer wässrigen Lösung (0,35 M NaCl; 0,5 M Tris-HCl pH 8,5) werden mit 0,02% Azorubin (rot; E 122) versetzt. Dazu gibt man 250 µl Phenol/CIA (Phenol: Chloroform:Isoamyalkohol= 25:24:1). Nach Schütteln des Gemisches läßt man das Gemisch zur Phasenseparierung 5 Minuten stehen. Die obere wässrige Phase ist durch die rote Färbung gut zu erkennen und läßt sich leicht abpipettieren.

### Beispiel 2

Zu 250 µl der wässrigen Lösung aus Beispiel 1, die zusätzlich 5 mg Zellmaterial enthält, wird E 127 gegeben, so daß die wässrige Lösung 0,02% dieses Farbstoffs enthält. Anschließend werden 250 µl Phenol/CIA zugegeben und 5 Minuten ausgeschüttelt. Zur Phasentrennung wird 5 Minuten bei 5.000 g abzentrifugiert. Die obere wässrige Phase ist rot gefärbt und enthält Nukleinsäuren und Nukleinsäurebestandteile. Diese Phase wird mit einer Pipette abgenommen. Der so erhaltene Nukleinsäureextrakt kann direkt durch Restriktionsanalyse weiter untersucht werden.

## Patentansprüche

1. Verfahren zur Phasentrennung von zwei oder mehr im Gemisch vorliegenden flüssigen Phasen, **dadurch gekennzeichnet, dass**
a) zumindest ein Lebensmittelfarbstoff dem Gemisch zugesetzt wird, wobei dieser zumindest eine Phase stärker anfärbt als eine andere, und
b) die unterschiedlich angefärbten Phasen voneinander getrennt werden.

2. Verfahren nach Anspruch 1, **dadurch gekennzeichnet, daß** nur ein Lebensmittelfarbstoff zugesetzt wird.

3. Verfahren nach Anspruch 1 oder 2, **dadurch gekennzeichnet, daß** der oder die Lebensmittelfarbstoffe nur eine Phase anfärben.

4. Verfahren nach einem der Ansprüche 1 bis 3, **dadurch gekennzeichnet, daß** zwei Phasen vorliegen.

5. Verfahren nach Anspruch 4, **dadurch gekennzeichnet, daß** eine organische und eine wässrige Phase vorliegen.

6. Verfahren nach Anspruch 5, **dadurch gekennzeichnet, daß** die wässrige Phase angefärbt wird.

7. Verfahren nach einem der Ansprüche 1 bis 6, **dadurch gekennzeichnet, daß** eine Phase hydrophile Bestandteile einer Probe enthält, die zuvor aus dieser Probe extrahiert wurden.

8. Verfahren nach einem der Ansprüche 1 bis 7, **dadurch gekennzeichnet, daß** eine Phase lipophile Bestandteile einer Probe enthält, die zuvor aus dieser Probe extrahiert wurden.

9. Verfahren nach Anspruch 7 oder 8, **dadurch gekennzeichnet, daß** eine wässrige Phase hydrophile Bestandteile enthält und eine organische Phase lipophile Bestandteile.

10. Verfahren nach einem der Ansprüche 7 bis 9, **dadurch gekennzeichnet, daß** Salze, phenolische Verbindungen, Proteine, Kohlenhydrate, Fette, Nukleinsäuren, Organelle und/oder andere Zellbestandteile extrahiert werden.

11. Verfahren nach einem der Ansprüche 7 bis 10, **dadurch gekennzeichnet, daß** die weiterzuverarbeitende Phase gefärbt wird.

12. Verfahren nach Anspruch 10 oder 11, **dadurch gekennzeichnet, daß** eine Nukleinsäure extrahiert wird.

13. Verfahren nach Anspruch 12, **dadurch gekennzeichnet, daß** die die Nukleinsäure enthaltende Phase nach der Phasentrennung analysiert wird, vorzugsweise durch Restriktionsverdau, Polymerase Chain Reaction, Blotten oder Hybridisierungen, wobei die Phase wahlweise zuvor aufkonzentriert wird.

## Claims

1. Process for the phase separation of two or more liquid phases present in a mixture, **characterized in that**
a) at least one food dye is added to the mixture, dyeing at least one phase more strongly than another, and
b) the differently dyed phases being separated from each other.

2. Process according to claim 1, **characterized in that,** only one food dye is added.

3. Process according to claim 1 or 2, **characterized in that** the food dye or dyes dye only one phase.

4. Process according to one of claims 1 to 3, **characterized in that** two phases are present.

5. Process according to claim 4, **characterized in that** an organic and an aqueous phase are present.

6. Process according to claim 5, **characterized in that** the aqueous phase is dyed.

7. Process according to one of claims 1 to 6, **characterized in that** one phase contains hydrophilic constituents of a sample which were previously extracted from this sample.

8. Process according to one of claims 1 to 7, **characterized in that** one phase contains lipophilic constituents of a sample, which were previously extracted from this sample.

9. Process according to claim 7 or 8, **characterized in that** an aqueous phase contains hydrophilic constituents and an organic phase contains lipophilic constituents.

10. Process according to one of claims 7 to 9, **characterized in that** salts, phenolic compounds, proteins, carbohydrates, fats, nucleic acids, organelles and/or other cellular constituents are extracted.

11. Process according to one of claims 7 to 10, **characterized in that** the phase to be further processed is dyed.

12. Process according to claim 10 or 11, **characterized in that** a nucleic acid is extracted.

13. Process according to claim 12, **characterized in that** the phase containing the nucleic acid is analyzed after the phase separation, preferably by restriction digestion, polymerase chain reaction, blotting or hybridizations, the phase optionally being concentrated beforehand.

## Revendications

1. Procédé de séparation de phases de deux phases liquides ou plus, se présentant à l'état mélangé, **caractérisé en ce que**
a) au moins un colorant pour produits alimentaires .est ajouté au mélange, celui-ci colorant plus fortement au moins une phase que l'autre, et
b) les phases colorées de façon différente sont séparées l'une de l'autre.

2. Procédé selon la revendication 1, caraetsrisé en ce qu'un seul colorant pour produits alimentaires est ajouté.

3. Procédé selon la revendication 1 ou 2, **caractérisé en ce que** le ou les colorants pour produits alimentaires ne colorent qu'une phase.

4. Procédé selon l'une des revendications 1 à 3, **caractérisé en ce que** l'on a deux phases.

5. Procédé selon la revendication 4, **caractérisé en ce que** l'on a une phase organique et une phase aqueuse.

6. Procédé selon la revendication 5, **caractérisé en ce que** la phase aqueuse est colorée.

7. Procédé selon l'une des revendications 1 à 6, **caractérisé en ce qu'**une phase contient des composants hydrophiles d'un échantillon, ayant été préalablement extraits à partir de cet échantillon.

8. Procédé selon l'une des revendications 1 à 7, **caractérisé en ce qu'**une phase contient des composants lipophiles d'un échantillon, ayant été préalablement extraits de cet échantillon.

9. Procédé selon la revendication 7 ou 8, **caractérisé en ce qu'**une phase aqueuse contient des composants hydrophiles et une phase organique contient des composants lipophiles.

10. Procédé selon l'une des revendications 7 à 9, **caractérisé en ce que** des sels, des combinaisons phénoliques, des protéines, des hydrates de carbone, des graisses, des acides nucléiques, des organelles et/ou d'autres composants cellulaires sont extraits.

11. Procédé selon l'une des revendications 7 à 10, **caractérisé en ce que** la phase à retraiter est colorée.

12. Procédé selon la revendication 10 ou 11, **caractérisé en ce qu'**un acide nucléique est extrait.

13. Procédé selon la revendication 12, **caractérisé en ce que** la phase contenant l'acide nucléique est analysée après la séparation des phases, de préférence par assimilation ou digestion restrictive, réaction en chaîne de polymérase, buvardages ou hybridisations, la phase étant au choix préalablement concentrée.
